# EUROPEAN PATENT SPECIFICATION

(11) **EP 1 043 146 B1**
(45) Date of publication and mention of the grant of the patent: **26.06.2002**
(21) Application number: 99830205.3
(22) Date of filing: 08.04.1999
(51) Int. Cl.: B29C 65/72, B29C 65/08

(54) **Method and apparatus for sealing straws of flexible bags**
Verfahren und Vorrichtung zum Abdichten von Strohhalmen für flexibele Beutel
Procédé et appareil pour obturer les paillettes de sacs souples

(43) Date of publication of application: 11.10.2000
(73) Proprietor: Robino & Galandrino S.p.A., 15100 Alessandria (IT)
(72) Inventor: Angeli, Gianfranco, 10137 Torino (IT)
(74) Representative: Spandonari, Carlo, Dr. Ing.

(56) References cited:
- FR-A- 2 511 294
- FR-A- 2 678 859
- GB-A- 1 289 298
- US-A- 3 549 440
- US-A- 4 411 720
- US-A- 4 683 016
- US-A- 4 719 739
- US-A- 4 938 818
- PATENT ABSTRACTS OF JAPAN vol. 009, no. 087 (M-372), 17 April 1985 (1985-04-17) -& JP 59 214616 A (TOYO ALUMINIUM KK), 4 December 1984 (1984-12-04)
- PATENT ABSTRACTS OF JAPAN vol. 013, no. 055 (M-795), 8 February 1989 (1989-02-08) -& JP 63 260427 A (YOSHINO KOGYOSHO CO LTD), 27 October 1988 (1988-10-27)

## Description

This invention is concerned with a method and apparatus for sealing straws of flexible bags after filling the bags with a fluid product.

Such flexible bags are provided with a filling straw consisting of a small polyethylene tube which is sealed into the envelope of the bag. Techniques and apparatus are available for filling the bags through their straws while avoiding contact with contaminating agents and even replacing the residual air within the bag with a non-oxidizing gas such as nitrogen. Because of these advantages, flexible bags have been increasingly used as containers for substances such as drinks, creamy foods, liquid nutrients, medicines, and the like.

After the filling step, the straw of the flexible bag is normally sealed by fusing a round leaflet of a laminated sheet material onto the upper edge of the straw. The leaflet is punched out of a strip of a multilayer material having a first layer of polyethylene or polypropylene suitable for fusing, and subsequent layers of aluminum, nylon, polyester (so-called alu-foil). According to a known method of sealing, after laying the strip of sheet material on the upper edge of the straw, a round, toothed cutting blade is lowered to press against the strip around the the straw end to punch out a leaflet from the strip, and the temperature of both the leaflet and the straw is then locally increased by pressing a flat, hot plate onto the leaflet, thus locally melting both the first layer of the sealing leaflet and the straw edge, which become fused together. A screw-cap is then screwed on the straw end to protect the sealing leaflet mechanically and to allow the user to recap the bag after perforating the leaflet.

However, the above sealing method is not free from disadvantages. As the cutting blade becomes blunt through wear, the nylon layer, which is the most resistant to shearing, may be incompletely cut in the punching step, and a thread of nylon may be left to connect the punched-out leaflet with the strip. As the bag is moved away from the strip and the welding head, such nylon thread is stretched elastically before breaking off, and may exert a force strong enough to partially pull or peel the leaflet away from the still hot, and consequently soft, straw end, forming invisible sealing flaws. This can, of course, be avoided by allowing the straw/leaflet weld to cool down substantially before moving the bag away, but then the dwelling time in the welding station is lengthened unacceptably.

In order to avoid the nylon-thread problem and to have a short dwelling time in the sealing station, another sealing method has been used, Accordingly, the leaflet is preliminarily punched out of the strip and is placed within the screw-cap. The screw-cap is then screwed onto the straw end and the assembly is placed inside an induction coil, which heats the aluminum layer by induction. The aluminum layer then heats the adjacent fusable layer and the edge of the straw by conduction.

Although this technique avoids the nylon-thread problem, it does, however, suffer from other drawbacks. One drawback is that the welding between the leaflet and the straw may be occasionally flawed by the wrinkles which are developed in the leaflet when the cap is tightened onto the straw. Another drawback is that the top layer of the leaflet, itself being indirectly heated by conduction from the aluminum layer, may become occasionally welded to the cap, which is itself of a thermoplastic material.

The above drawbacks of the sealing techniques of the prior art considerably increase the rejection rate of the finished bags, and adversely affect the current aim of a rejection rate of less than 5 faults in 100,000 bags. This is particularly objectionable in view of the kind of products that are typically packaged in flexible bags, i.e. food and medicines.

US 4 938 818 discloses a method for forming a seal in a collapsible tube having a rigid molded thermoplastic head welded thereto.

The main object of the invention is therefore to provide a method and an apparatus for fusing sealing leaflets to straws of flexible bags, which overcome the above problems, by improving the reliability of seals on filling straws. Another object is to increase the speed of the sealing operation.

The above objects, as well as other objects and advantages such as will appear from the disclosure, are achieved by the invention with a method for sealing straws of flexible bags having the features recited in claim 1.

The invention also comprises an apparatus for sealing straws of flexible bags having the features set out in claim 6.

A preferred embodiment of the invention will now be described, with reference to the enclosed drawings, wherein:
Fig. 1 is a front view, partially in cross-section, of a tacking station for carrying out one step of a sealing method according to the invention;
Fig. 2 is a cross-section side view of the tacking station of Fig. 1;
Fig. 3 is a view in cross-section made along line III-III of Fig. 1;
Fig. 4 is a cross-section side view of a welding station for carrying out another step of the sealing method according to the invention; and
Fig. 5 is a detail cross-section side view, on an enlarged scale, of the tip of a welding head used in the welding station of Fig. 4.

According to the method of the invention, an alu-foil leaflet is tacked on a filling straw of a flexible bag by subjecting it to ultrasound vibration of a frequency and for a time duration such that the thermoplastic material of the straw and of the bottom layer of the alu-foil are only heated to a temperature of 50 to 60 °C, so that they become tacked to each other, though not fully fused together, and so that the nylon and polyester layers in the alu-foil are not affected. Because of the small amount of material involved in the partial melting or softening and of the low temperature attained, the material will quickly cool down to a temperature below the softening point of the thermoplastic material of the straw and of the bottom layer of the alu-foil, as soon as the ultrasound vibration is stopped. The flexible bag is then moved on to a final welding operation, where induction heating is used to heat the leaflet-straw junction to a high temperature, such as about 100 °C, for a sufficient time (such as 0.5 sec) to bring about a complete fusing of the junction.

Because of the low temperature and short duration of the tacking operation, and because of the quick subsequent cooling, any nylon threads which have formed during punching will not soften and will quickly break off when the flexible bag is moved away from the tacking location. When the final fusing by induction heating is made, there can be no more nylon threads creating problems, irrespective of the temperature reached. Also, it will not be necessary to allow the sealed straw to cool down substantially before being moved on, so that the overall speed of the sealing operation can be increased.

Preferably, according to the inventive method, a narrow edge of the sealing leaflet is bent down at about 30° to 60° around the straw tip during final welding. This will improve the sealing by extending the fusing area.

The method is best carried out by providing an apparatus comprising a tacking station to carry out the punching and ultrasound tacking steps, and a welding station to carry out the final fusing by induction heating, placed at subsequent, adjacent locations along a processing line where the flexible bags are filled and sealed, say a conveyor belt or a turning table.

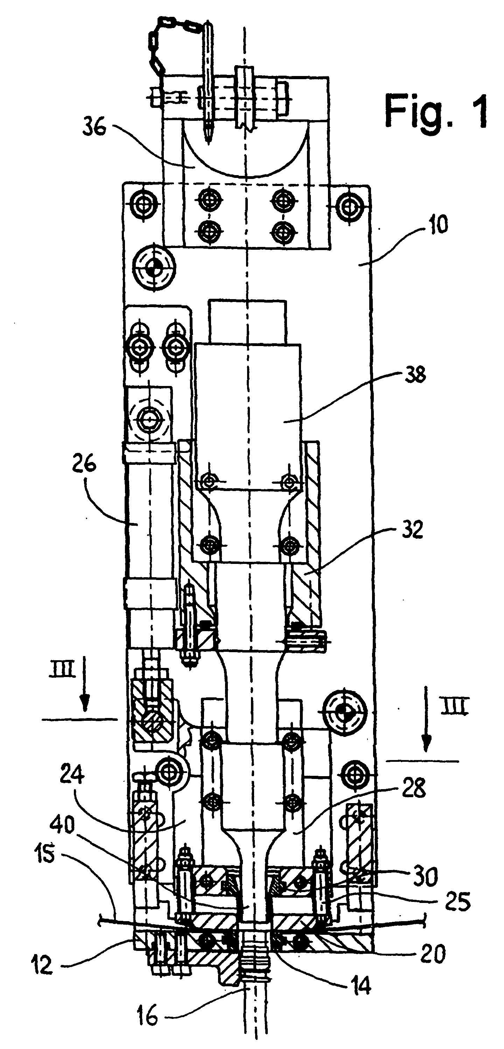

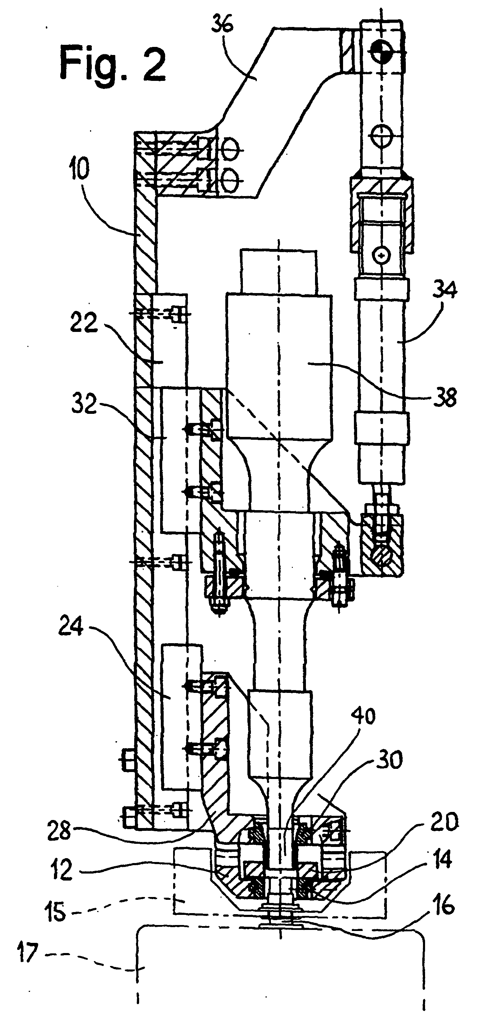

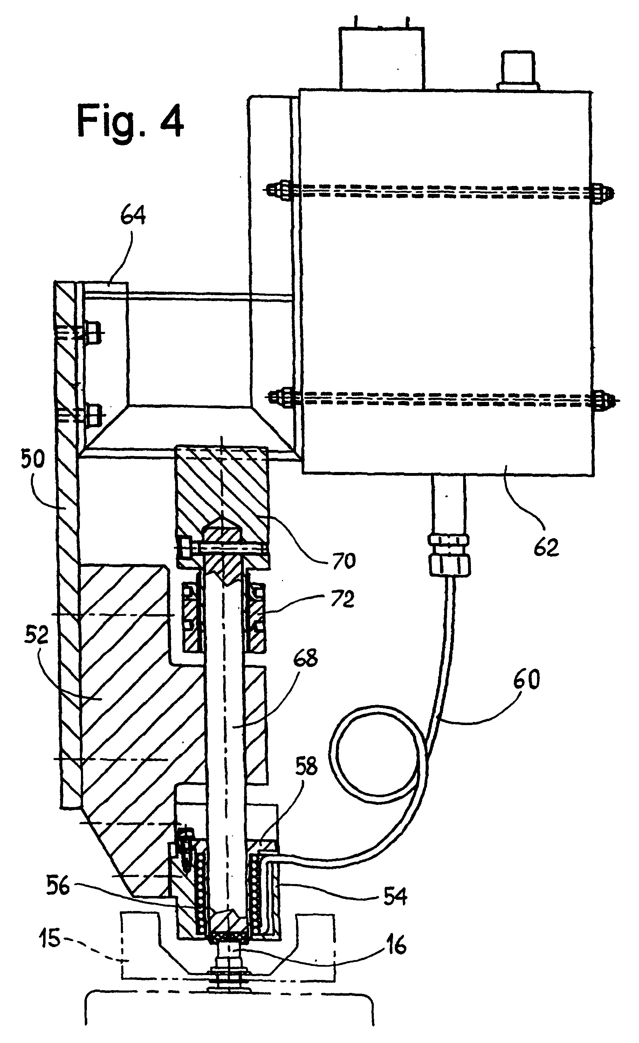

With reference to Fig. 1, 2 and 3, showing a tacking station for carrying out the method of the invention, a carrier plate 10, supported on the frame of a bag-filling apparatus not shown, carries a bracket 12 having a vertical bore, lined with a polyester bushing 14, for receiving the upper end of a filling straw 16 of a bag 17 (shown in phantom lines). Straw 16 is one of a row of straws hanging from holding forks such as 15 (also shown in phantom lines), carried by a conveyor chain or turntable that is not shown, as it does not belong to the invention and is well known in the art. The carrier plate is movable vertically under the action of actuator means not shown to lower bracket 12 onto a straw 16 so that the the straw tip is received into bushing 14. An alu-foil 18 is arranged for intermittent feeding along the upper surface of bracket 12, above its bore, and a presser plate 20 which is further discussed below. The alu-foil supporting and feeding device is outside the scope of the invention, is well known in the art, and is therefore not shown.

Carrier plate 10 also has a vertical slideway 22 along which a first slide 24 is movable under the driving action of an air cylinder 26. A bracket 28, bolted to slide 24, carries a round hollow punch 30, preferably having a toothed cutting edge as known in the art. Presser plate 20 is elastically suspended from slide 24, by means of bolts and springs such as 25.

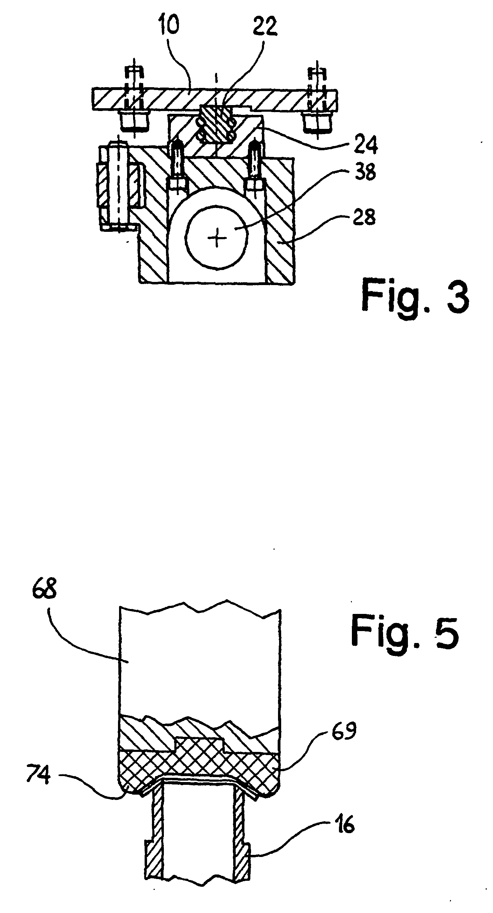

Punch 30 is aligned with bore 12, so that, when slide 24 is lowered, punch 30 will move down to cut into alu-foil 18 and separate a leaflet 21 (Fig. 5) which will abut against the upper edge of the straw.

A second slide 32 is movably supported on slideway 22. This is linked to the lower end of an air cylinder 34, depending from a bracket 36, for vertical movement. An ultrasound sonotrode unit 38, known in the art, is carried by slide 32, is aligned with punch 30 and has a narrow, concave-tipped nose 40, adapted to be snugly received within hollow punch 30 to be pressed against the upper edge of straw 16 or against any alu-foil leaflet lying on it.

When the tacking station as described above and shown in Figs. 1 to 3 is at rest, both slides 32 and 24 are up, so that sonotrode 38 is well out of the way of punch 30 and presser plate 20 is lifted from alu-foil 18, which can thus be fed one step (by means not shown) before starting the next tacking operation.

When the filling straw of a flexible bag is to be engaged by the tacking station, the carrier plate is lowered to receive the straw tip into bushing 14. Slide 24 is then lowered so that presser plate 20 leans against alu-foil 18 (as shown on Fig. 1) to clamp it, and punch 30 then descends on it to cut a leaflet and push it onto the upper edge of straw 16. More or less simultaneously, slide 32 is also lowered, while sonotrode 38 is turned on, so that its nose 40 slides through hollow punch 30 and presses onto leaflet to heat it by mechanical vibration. After the ultrasonic tacking has taken place, both the punch and the sonotrode are withdrawn, and finally the entire carrier plate is lifted back to free the straw and allow holding fork 15 to move the bag forward to the next processing step.

The vibration frequency and the dwelling time of sonotrode 38 are chosen so that the leaflet-straw junction is only moderately heated, typically to 50 to 60°C. This temperature is such that the leaflet is not fully welded, but only tacked to the straw tip, i.e., only partial fusing takes place. The vibration frequency is preferably about 30 kHz and the duration of sonotrode pressing is preferably about 1/10 sec.

The apparatus of the invention also comprises an induction welding station, where the tacked leaflet is fully welded to the filling straw. With reference to Fig. 4, the welding station comprises a carrier plate 50, similar to carrier plate 10, and also movable vertically under the action of actuator means not shown. A bracket 52, bolted to carrier plate 50, carries a housing 54 for an induction coil 56. Coil 56 is held in position by a bushing 58, extending within the coil to confine it and to define an axial passage within it. Preferably, housing 54 and bushing 58 are made of a hard plastic material such as a polyester or other suitable synthetic material. Electric current is supplied to coil 56, as known in the art, through a cable 60, by a power unit 62, which is supported on another bracket 64 bolted to carrier plate 66.

Bracket 52 also houses a welding head 68, which comprises a cylindrical bar of a synthetic material, received slidingly through a bore in the bracket and through bushing 48, and coaxial with it. Welding head 68 carries a weight 70 and a ring nut 72 acting as a travel stop.

The above described welding station is located adjacent to the tacking station described above, so that fork 15 will move the bag to the welding station after the bag has been treated in the tacking station. Carrier plate 50 is normally up, and is arranged to descend when the straw is aligned with the welding head, tu press the welding head onto the tacked leaflet. Current is then supplied for the required duration to fuse the leaflet on the straw, and the carrier plate is then lifted off, while fork 15 carrying the bag may immediately move away from the welding station without waiting for the sealing junction to cool down.

In order to improve the seal, the lower end of welding head 68, as shown on Fig. 5, is provided with a pusher 69, of an elastomeric material such as a silicone, shaped with a peripheral rib 74, having an inclined inner side to define an axial, frusto-conical seat or depression having a cone angle of 30 to 60° to the axis of the welding head. The diameter of the rib is chosen to be slightly larger than the diameter of the bag-filling straw, so that, when the welding head is pressed down on the sealing leaflet, the frusto-conical depression will enclose and compress the leaflet against the edge of the straw also along its side, thus increasing the area of the weld and generally improving its reliability.

## Claims

1. A method for sealing the polyethylene straw (16) of a flexible bag (17) with a leaflet of a compound sheet material having at least a bottom layer of readily meltable material, wherein the leaflet is punched out of a strip 18 of the sheet material, is laid onto the upper edge of the straw (16) with the bottom layer in contact therewith, and is fused therewith by local heating, **characterized in that** the fusing operation comprises the following steps:
- subjecting the straw (16) and the leaflet to ultrasonic vibration with a frequency and for a duration sufficient to increase the temperature of the upper edge of the straw and of the bottom layer of the leaflet so that they become tacked together, but insufficient to achieve permanent sealing and insufficient to achieve melting of any less readily meltable materials which are part of the leaflet;
- displacing the straw (16) and the tacked leaflet away from the punching location; and
- subjecting the straw and the leaflet to induction heating while applying pressure to the leaflet, at a temperature and for a duration sufficient to achieve full sealing.

2. The method of claim 1, **characterized in that** the readily meltable material of the bottom layer of the leaflet is polyethylene.

3. The method of claim 1, **characterized in that** the readily meltable material of the bottom layer of the leaflet is polypropylene.

4. The method of claim 1, **characterized in that** the vibration frequency of the sonotrode is about 30 kHz.

5. The method of claim 4, **characterized in that** the time duration of sonotrode application to the leaflet is about 0.1 sec.

6. An apparatus for sealing the thermoplastic straw (16) of a flexible bag (17) with a leaflet of a compound sheet material having at least a bottom layer of readily meltable material, having punching means (30) for punching the leaflet out of a strip (8) of the sheet material and for laying the leaflet onto the upper edge of the straw (16) with the bottom layer in contact therewith, **characterized in that** it further comprises:
- tacking means associated with the punching means and comprising an ultrasonic sonotrode unit (38, 40) arranged for pressing onto the leaflet lying on the straw (16) after it has been punched out by the punching means (30); and
- induction welding means (68) located adjacent but separate from the tacking means; and
- means (15) for conveying a flexible bag from the tacking means to the welding means.

7. The apparatus of claim 6, **characterized in that** the vibration frequency of the sonotrode unit is about 30 kHz.

8. The apparatus of claim 6 or 7, **characterized in that** the welding means include a welding head (68) having an operating tip (69) provided with a frontal peripheral rib (74) to define a frontal depression.

9. The apparatus of claim 8, **characterized in that** the rib on the welding head has an inclined inner side defining a frusto-conical surface with an angle of 30° to 60° to the axis of the welding head.

## Patentansprüche

1. Verfahren zum Abdichten des Polyethylen-Strohhalmes (16) eines flexiblen Beutels (17) mit einem Blättchen aus einem Verbundschichtmaterial, das zumindest eine untere Schicht aus leicht schmelzbarem Material aufweist, wobei das Blättchen aus einem Streifen (18) des Schichtmaterials ausgestanzt und so auf den oberen Rand des Strohhalms (16) gelegt wird, dass die untere Schicht diesen berührt, sowie mit diesem durch örtliches Erwärmen verschmolzen wird,
**dadurch gekennzeichnet, dass** der Verschmelzvorgang die folgenden Schritte umfasst:
- Aussetzen des Strohhalmes (16) und des Blättchens an Ultraschallvibrationen mit einer Frequenz und über eine Zeitdauer, die ausreichend sind, die Temperatur des oberen Randes des Strohhalmes und der unteren Schicht des Blättchens zu erhöhen, so dass sie aneinander geheftet werden, jedoch nicht ausreichend sind, eine dauerhafte Abdichtung zu erzielen und ebenfalls nicht ausreichend, ein Schmelzen von weniger leicht schmelzbaren Materialien, die Teil des Blättchens sind, zu erreichen;
- Verschieben des Strohhalmes (16) und des gehefteten Blättchens weg von der Stanzstelle; und
- Unterziehen des Strohhalmes und des Blättchens einer Hochfrequenzerwärmung unter Anwendung von Druck auf das Blättchen bei einer Temperatur und über eine Zeitdauer, die ausreichend sind, um eine vollständige Abdichtung zu erreichen.

2. Verfahren nach Anspruch 1,
**dadurch gekennzeichnet, dass** das leicht schmelzbare Material der unteren Schicht des Blättchens Polyethylen ist.

3. Verfahren nach Anspruch 1,
**dadurch gekennzeichnet, dass** das leicht schmelzbare Material der unteren Schicht des Blättchens Polypropylen ist.

4. Verfahren nach Anspruch 1,
**dadurch gekennzeichnet, dass** die Vibrationsfrequenz der Sonotrode ungefähr 30 kHz beträgt.

5. Verfahren nach Anspruch 4,
**dadurch gekennzeichnet, dass** die Zeitdauer der Sonotrodenanwendung auf das Blättchen ungefähr 0,1 sec beträgt.

6. Vorrichtung zum Abdichten des Thermoplast-Strohhalmes (16) eines flexiblen Beutels (17) mit einem Blättchen aus einem Verbundschichtmaterial, das zumindest eine untere Schicht aus leicht schmelzbarem Material aufweist, welche Vorrichtung eine Stanzeinrichtung (30) zum Ausstanzen des Blättchens aus einem Streifen (18) des Schichtmaterials und zum Legen des Blättchens auf den oberen Rand des Strohhalmes (16), so dass die untere Schicht diesen berührt, umfasst,
**dadurch gekennzeichnet, dass** sie ferner umfasst:
- eine Hefteinrichtung, die der Stanzeinrichtung zugeordnet ist und eine Ultraschall-Sonotroden-Einheit (38, 40) umfasst, die dafür ausgelegt ist, auf das auf dem Strohhalm (16) liegende Blättchen Druck auszuüben, nachdem dieses durch die Stanzeinrichtung (30) ausgestanzt worden ist, und
- eine Induktionsschweißeinrichtung (68), die benachbart zur Hefteinrichtung jedoch separat von dieser angeordnet ist, und
- eine Einrichtung (15) zum Befördern eines flexiblen Beutels von der Hefteinrichtung zur Schweißeinrichtung.

7. Vorrichtung nach Anspruch 6,
**dadurch gekennzeichnet, dass** die Vibrationsfrequenz der Sonotroden-Einheit ungefähr 30 kHz beträgt.

8. Vorrichtung nach Anspruch 6 oder 7,
**dadurch gekennzeichnet, dass** die Schweißeinrichtungen einen Schweißkopf (68) mit einer Arbeitsspitze (69) umfassen, welche mit einer stirnseitigen Umfangsrippe (74) versehen ist, um eine stirnseitige Vertiefung zu definieren.

9. Vorrichtung nach Anspruch 8,
**dadurch gekennzeichnet, dass** die Rippe auf dem Schweißkopf eine abgeschrägte Innenseite hat, die eine kegelstumpfförmige Oberfläche mit einem Winkel von 30° bis 60° zur Achse des Schweißkopfes definiert.

## Revendications

1. Procédé pour rendre étanche la paille en polyéthylène (16) d'un sachet souple (17) avec un feuillet en un matériau en feuille composé ayant au moins une couche inférieure en un matériau aisément fusible, dans lequel le feuillet est estampé à partir d'une bande (18) du matériau en feuille, est couché sur le bord supérieur de la paille (16), la couche inférieure étant au contact de celle-ci, et est fusionné avec celle-ci par chauffage local, **caractérisé en ce que** l'opération de fusion comprend les étapes suivantes :
- on soumet la paille (16) et le feuillet à une vibration ultrasonore à une fréquence et pendant une durée suffisantes pour augmenter la température du bord supérieur de la paille et de la couche inférieure du feuillet, de manière à ce qu'ils soient fait adhérer ensemble, mais insuffisantes pour atteindre un scellement permanent et insuffisantes pour provoquer la fusion de matériaux quelconques moins aisément fusibles faisant partie du feuillet ;
- on déplace la paille (16) et le feuillet fait adhérer, pour les éloigner de l'emplacement d'estampage ; et
- on soumet la paille et le feuillet à un chauffage par induction tout en appliquant une pression au feuillet, à une température et pendant une durée suffisantes pour produire un scellement complet.

2. Procédé selon la revendication 1, **caractérisé en ce que** le matériau aisément fusible de la couche inférieure du feuillet est du polyéthylène.

3. Procédé selon la revendication 1, **caractérisé en ce que** le matériau aisément fusible de la couche inférieure du feuillet est du polypropylène.

4. Procédé selon la revendication 1, **caractérisé en ce que** la fréquence de vibration de l'électrode ultrasonore est d'environ 30 kHz.

5. Procédé selon la revendication 4, **caractérisé en ce que** la durée d'application de l'électrode ultrasonore sur le feuillet est d'environ 0,1 secondes.

6. Appareil pour rendre étanche la paille thermoplastique (16) d'un sachet souple (17) avec un feuillet en un matériau en feuille composé ayant au moins une couche inférieure en un matériau aisément fusible, comportant des moyens d'estampage (30) pour estamper le feuillet à partir d'une bande (18) du matériau en feuille et pour coucher le feuillet sur le bord supérieur de la paille (16), la couche inférieure étant au contact de celle-ci, **caractérisé en ce qu'**il comporte, en outre :
- des moyens d'adhésion, associés aux moyens d'estampage, et comprenant une unité d'électrode ultrasonore (38, 40) configurée pour presser le feuillet couché sur la paille (16) après qu'il a été estampé par les moyens d'estampage (30) ;
- des moyens de soudage par induction (68) disposés au voisinage, mais séparés, des moyens d'adhésion ; et
- des moyens (15) pour convoyer un sachet souple depuis les moyens d'adhésion jusqu'aux moyens de soudages.

7. Appareil selon la revendication 6, **caractérisé en ce que** la fréquence de vibration de l'unité d'électrode ultrasonore est d'environ 30 kHz.

8. Appareil selon la revendication 6 ou 7, **caractérisé en ce que** les moyens de soudage comprennent une tête de soudage (68) ayant une pointe opérationnelle (69) munie d'un rebord périphérique frontal (74) pour définir une cavité frontale.

9. Appareil selon la revendication 8, **caractérisé en ce que** le rebord sur la tête de soudage possède un côté intérieur incliné définissant une surface tronconique avec un angle de 30° à 60° par rapport à l'axe de la tête de soudage.
